(19) Europäisches Patentamt
European Patent Office
Office européen des brevets

(11) **EP 4 132 797 B1**

(12) **EUROPÄISCHE PATENTSCHRIFT**

(45) Veröffentlichungstag und Bekanntmachung des Hinweises auf die Patenterteilung:
**27.08.2025 Patentblatt 2025/35**

(21) Anmeldenummer: **21719861.3**

(22) Anmeldetag: **01.04.2021**

(51) Internationale Patentklassifikation (IPC):
**B42D 25/324** *(2014.01)*   **B42D 25/36** *(2014.01)*
**B42D 25/373** *(2014.01)*   **B42D 25/29** *(2014.01)*
**B42D 25/425** *(2014.01)*   **G02B 5/00** *(2006.01)*

(52) Gemeinsame Patentklassifikation (CPC):
**B42D 25/324; B42D 25/29; B42D 25/36;**
**B42D 25/373; B42D 25/425; G02B 1/14;**
**G02B 5/1809; G02B 5/1852; G07D 7/003;**
**G07D 7/12**

(86) Internationale Anmeldenummer:
**PCT/EP2021/058736**

(87) Internationale Veröffentlichungsnummer:
**WO 2021/204703 (14.10.2021 Gazette 2021/41)**

(54) **VERFAHREN ZUR HERSTELLUNG EINES SICHERHEITSELEMENTS MIT EINER FARBIGEN MIKROSTRUKTUR**

METHOD FOR PRODUCING A SECURITY ELEMENT COMPRISING A COLOURED MICROSTRUCTURE

PROCÉDÉ DE FABRICATION D'UN ÉLÉMENT DE SÉCURITÉ COMPRENANT UNE MICROSTRUCTURE COLORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2020 AT 502912020**

(43) Veröffentlichungstag der Anmeldung:
**15.02.2023 Patentblatt 2023/07**

(73) Patentinhaber: **Hueck Folien Gesellschaft m.b.H.**
**4342 Baumgartenberg (AT)**

(72) Erfinder:
• **LANDERTSHAMER, Sonja**
**4040 Linz (AT)**

• **TRASSL, Stefan**
**4342 Baumgartenberg (AT)**
• **MAYRHOFER, Marco**
**4342 Baumgartenberg (AT)**

(74) Vertreter: **KLIMENT & HENHAPEL**
**Patentanwälte OG**
**Gonzagagasse 15/2**
**1010 Wien (AT)**

(56) Entgegenhaltungen:
**EP-A1- 2 921 888**      **EP-A1- 3 404 070**
**WO-A2-2008/017362**   **WO-A2-2009/083146**
**DE-A1- 102010 014 866**

**Beschreibung**

Die Erfindung betrifft ein Verfahren zur Herstellung eines Sicherheitselements mit einer farbigen Mikrostruktur sowie die Verwendung eines Sicherheitselements mit einer farbigen Mikrostruktur.

Datenträger, wie Wertdokumente und dergleichen, werden zum Schutz vor Fälschungen und zur Prüfung der Authentizität mit Sicherheitselementen versehen. Unter Datenträgern im Sinne der vorliegenden Erfindung werden insbesondere Wertdokumente, wie Banknoten, Urkunden und Aktien, sowie Ausweisdokumente, z.B. Pässe und dergleichen, verstanden. Auch andere Gegenstände, wie zum Beispiel Verpackungsmaterialien und Markenartikel werden häufig mit Sicherheitselementen ausgestattet, die eine Überprüfung der Echtheit gestatten und zugleich als Schutz vor unerlaubter Reproduktion dienen.

Zu diesem Zweck verwendete Sicherheitselemente weisen oft optisch variable Elemente auf, die einem Betrachter je nach Betrachtungswinkel einen spezifischen Bildeindruck vermitteln und selbst mit hochwertigen Farbkopiergeräten nicht reproduziert werden können. Zum Beispiel weisen diese Elemente Merkmale in Form von beugungsoptisch wirksamen Mikro- oder Nanostrukturen, wie konventionelle Prägehologramme oder dergleichen, auf. Grundsätzlich gilt, dass die Fälschungssicherheit umso größer ist, je kleiner die Strukturen ausgebildet werden.

Aufgrund der geringen Größe der Strukturen sind jene Techniken, bei denen Auftragungsverfahren wie Druckverfahren eingesetzt werden, zur Erzeugung solcher Mikromotivelemente jedoch nur bedingt geeignet, da die erzielbare Minimalgröße der Mikromotivelemente durch das Auflösungsvermögen des Auftragungsverfahrens begrenzt ist. Deshalb werden Mikrostrukturen bevorzugt mittels Prägung erzeugt, da dies die Herstellung von Strukturen in sehr hoher Auflösung ermöglicht.

Als besonders fälschungssicher und auffällig gelten mikrooptische Darstellungsanordnungen mit kontrastreichen farbigen Mikrostrukturen. Die Mikrostrukturelemente von Sicherheitselementen werden aus diesem Grund gerne eingefärbt. Zur Einfärbung geprägter Mikrostrukturen sind einige Verfahren bekannt.

Die WO 2009/083146 beschreibt ein Verfahren zur Erzeugung einer Mikrostruktur, wobei mit einem Aufdruckstoff entweder nur die Erhebungen der erzeugten Prägestruktur bedeckt oder nur deren Vertiefungen gefüllt werden. Um nur auf den Erhebungen der Prägestruktur zu haften, muss der Aufdruckstoff hochviskos sein, wohingegen er entsprechend niedrigviskos zu sein hat, damit nur die Vertiefungen befüllt werden. Um die gewünschte selektive Auftragung zu erreichen, ist es erforderlich, die Viskosität des Aufdruckstoffs und die Übertragungsbedingungen genau aufeinander abzustimmen, was sich häufig als schwierig erweist, und die Auftragung erfolgt deshalb nicht so selektiv wie gewünscht.

Gemäß WO 2009/121578 werden bei einem Verfahren zum Erzeugen einer mikrooptischen Darstellungsanordnung die in einer Prägestruktur in einem Träger erzeugten Vertiefungen mit Farbe gefüllt, wobei überschüssige Farbe abgerakelt wird. Durch das Abrakeln, welches ein rein mechanisches Verfahren ist, wird die überschüssige Farbe außerhalb der Vertiefungen jedoch nicht vollständig entfernt, was dazu führt, dass ein Tonungsfilm zurückbleibt, der den maximal erreichbaren Kontrast begrenzt.

In der WO 2011/057739 wird ein Verfahren offenbart, das ein Zurückbleiben eines derartigen Tonungsfilms vermeiden soll. Das Verfahren sieht hierzu das Auftragen einer Schutzschicht auf der Oberfläche des Mikrostrukturträgers, wobei die Schutzschicht den mit Mikrovertiefungen versehenen Oberflächenbereich nicht abdeckt, und danach das Auftragen einer Farbe vor, die sowohl die Mikrovertiefungen füllt als auch eine Schicht auf der Schutzschicht bildet. Anschließend wird die Schutzschicht zusammen mit der unerwünschten Farbschicht entfernt. Allerdings verbleibt dabei die unerwünschte Farbe auf den Erhebungen zwischen den einzelnen Mikrovertiefungen.

Um einen optimalen Kontrast zu erzielen, d.h. um den Tonungsfilm auch auf den Erhebungen zwischen den einzelnen Vertiefungen zu entfernen, schlägt die WO 2011/057739 vor, zuerst die Vertiefungen mit einer Trennschicht zu füllen, dann eine Schutzschicht aufzutragen, danach die Schutzschicht mit der Trennschicht in den Vertiefungen zu entfernen, anschließend die Farbschicht aufzutragen, diese in den unerwünschten Bereichen soweit wie möglich abzurakeln und schließlich die Schutzschicht gemeinsam mit den unerwünschten Bereichen der Farbschicht zu entfernen. Diese Vorgehensweise verlangt jedoch zahlreiche Verfahrensschritte und ist daher äußerst aufwändig.

Ein einfaches Verfahren zur Erzeugung einer farbigen Mikrostruktur, bei der Farbe nur in einem definierten, lokal begrenzten Bereich vorhanden ist, ist bisher nicht bekannt.

Die EP 3404070 A1 offenbart ein Verfahren zur selektiven Beschichtung von Oberflächenbereichen eines Verbundgebildes, wobei in die Vertiefungen einer Prägelackschicht eine Ablöselackschicht aufgebracht wird, wobei aufgrund des Wicking-Effekts nur die Vertiefungen mit dem Ablöselack befüllt werden.

In der EP 2921888 A1 wird ein Verfahren zur Herstellung einer fälschungssicheren Struktur beschrieben, bei dem in einer Prägeschicht zwei Reliefstrukturbereiche gebildet werden, ein erster mit tiefen Kanälen und ein zweiter mit weniger tiefen Kanälen. Beide Bereiche werden mit Feinteilchen beschichtet, wobei diese die tiefen Kanäle des ersten Bereichs füllen und vom anderen Bereich entfernt werden. Anschließend werden beide Bereiche mit einer reflektierenden Schicht beschichtet, die dann gemeinsam im ersten Bereich mit den in die tieferen Kanäle gefüllten Feinteilchen gelöst wird.

Die WO 2008/017362 beschreibt ein Verfahren zur Herstellung eines fälschungssicheren Mehrschichtkörpers mit mindestens einer partiell ausgeformten Funktionsschicht im Register zu einer weiteren solchen Schicht, wobei in einer Replizierschicht eine erste und eine zweite Reliefstruktur ausgebildet werden, die ein unterschiedliches Tiefe-zu-Breite-Verhältnis aufweisen.

Bei dem in der DE 10 2010 014 866 A1 beschriebenen Verfahren zum Erzeugen eines Sicherheitsmerkmals wird in einem flachen Substrat auf einer Seite in mindestens einem Bereich eine Ausnehmung oder Durchbrechung erzeugt, die mit einem Markierungsstoff, z.B. einem Farbstoff, gefüllt wird.

Die vorliegende Erfindung stellt sich daher die Aufgabe, die Nachteile des Standes der Technik zu überwinden und ein Verfahren bereitzustellen, das die Herstellung von kontrastreichen farbigen Mikrostrukturen auf Sicherheitselementen ermöglicht und auf einfache Weise durchzuführen ist. Insbesondere soll das Verfahren in nur wenigen Schritten zum gewünschten Ergebnis führen und die Bildung eines Tonungsfilms zwischen Strukturelementen vermieden werden.

Diese Aufgabe wird durch die Merkmale des Verfahrens gemäß Anspruch 1 gelöst. Vorteilhafte Ausgestaltungen der Erfindung sind in den abhängigen Ansprüchen angegeben.

Gegenstand der Erfindung ist das in Anspruch 1 definierte Verfahren zur Herstellung eines Sicherheitselements mit einer farbigen Mikrostruktur, umfassend die folgenden Schritte:

a) Bereitstellen eines Trägersubstrats
b) Aufbringen einer Prägelackschicht auf das Trägersubstrat
c) Einbringen von Mikrokanälen in einen für die farbige Mikrostruktur vorgesehenen Bereich der Prägelackschicht
d) Aushärten der Prägelackschicht
e) Aufbringen eines Farblacks, der ausschließlich die Mikrokanäle benetzt und füllt, auf die ausgehärtete Prägelackschicht
f) Trocknen und/oder Aushärten des Farblacks und gegebenenfalls Aufbringen einer funktionellen Schicht oder einer Schutzlackschicht nach Trocknen und/oder Aushärten des Farblacks.

Das Problem bei den Verfahren des Stands der Technik besteht häufig in der Erzeugung eines Tonungsfilms, der den maximal erzielbaren Kontrast bei farbigen Mikrostrukturen in unerwünschter Weise verringert.

Die Erfindung löst das Problem dadurch, dass durch gezielte Vorstrukturierung mittels eines Prägeprozesses eine definierte, lokal begrenzte Benetzung der Mikrostrukturoberfläche durch Farblack erreicht wird, der ausschließlich in die Mikrokanäle eindringt und diese füllt, die anderen Oberflächenbereiche der Mikrostruktur aber nicht benetzt werden.

Als Trägersubstrate kommen vorzugsweise flexible Kunststofffolien, auch Trägerfolien genannt, zum Einsatz. Hierbei kann es sich beispielsweise um PI (Polyimid), PP (Polypropylen), MOPP (monoaxial verstrecktes Polypropylen), PE (Polyethylen), PPS (Polyphenylensulfid), PEEK (Polyetheretherketon), PEK (Polyetherketon), PEI (Polyetherimid), PSU (Polysulfon), PAEK (Polyaryletherketon), LCP (Flüssigkristallpolymere - liquid crystal polymers), PEN (Polyethylennaphthalat), PBT (Polybutylenterephtalat), PET (Polyethylenterephthalat), PA (Polyamid), PC (Polycarbonat), COC (Cyclo-Olefin-Copolymere), POM (Polyoxymethylen), ABS (Acrylnitril-Butadien-Styrol), PVC (Polyvinylchlorid), PTFE (Polytetrafluorethylen), ETFE (Ethylentetrafluorethylen), PFA (Tetrafluorethylen-Perfluorpropylvinylether-Fluorcopolymer), MFA (Tetrafluormethylen-Perfluorpropylvinylether-Fluorcopolymer), PVF (Polyvinylfluorid), PVDF (Polyvinylidenfluorid), und EFEP (EthylenTetrafluorethylen-Hexafluorpropylen-Fluorterpolymer) und/oder Mischungen und/oder Co-Polymere dieser Materialien handeln. Vorzugsweise ist das Trägersubstrat aus zumindest einem dieser Materialien hergestellt.

Die Dicke des Trägersubstrats kann dabei von 5 - 700 $\mu$m, bevorzugt 5 - 200 $\mu$m, besonders bevorzugt 5 - 50 $\mu$m, betragen.

Auf das Trägersubstrat wird eine Prägelackschicht aufgebracht. In diese Prägelackschicht werden in einen für die farbige Mikrostruktur vorgesehenen Bereich Mikrokanäle eingebracht.

Gegebenenfalls können gleichzeitig auch Nanostrukturen, die für andere Sicherheitsmerkmale verwendet werden, beispielsweise Hologramme oder hologrammähnliche Beugungsstrukturen, eingebracht werden.

Geeignet zur Einbringung der Mikrokanäle und Nanostrukturen sind Prägeverfahren, bei denen das Prägewerkzeug vorzugsweise derart gestaltet ist, dass sowohl die Mikrokanäle als auch die Nanostrukturen in einem Arbeitsgang in die Prägelackschicht eingebracht werden.

Unter Mikrokanälen werden hier Strukturen verstanden, die eine Tiefe von 2 - 100 $\mu$m, bevorzugt 3 - 20 $\mu$m, und eine Breite von 2 - 100 $\mu$m aufweisen. Das Verhältnis von Tiefe zu Breite beträgt dabei etwa 1:1 bis 10:1, bevorzugt 2:1 bis 5:1. Die Mikrokanäle weisen dabei eine sich in die Tiefe verjüngende Geometrie, beispielsweise eine V-förmige Geometrie oder eine Geometrie mit konvexen Kanten auf.

Unter Nanostrukturen werden hierin Strukturen mit einer geringen Tiefe verstanden, die im Wesentlichen optisch aktive Beugungsstrukturen, wie Hologramme, Oberflächenreliefs und dergleichen, darstellen. Üblicherweise weisen die Nanostrukturen eine Tiefe und eine Breite von jeweils < 2 $\mu$m, vorzugsweise 20 - 500 nm, besonders bevorzugt 200 - 500 nm, auf. Das Verhältnis von Tiefe zu Breite beträgt dabei ungefähr 1:3 bis 1:0,3, vorzugsweise 1:2 - 1:0,5, besonders bevorzugt etwa 1:1.

Das Verhältnis der Nanostrukturen zu den Mikrokanälen kann 1:4 bis 1:5000, vorzugsweise 1:6 bis 1:100, betragen.

Nach Aushärtung der Prägelackschicht, vorzugsweise unter UV-Bestrahlung, wird ein Farblack aufgebracht. Die Prägelackschicht muss auf den nach Einbringen der Mikrokanäle und gegebenenfalls Nanostrukturen aufgebrachten Farblack abgestimmt sein, damit durch den Farblack ausschließlich die Mikrokanäle benetzt und gefüllt werden. Dabei wird der sogenannte Wicking-Effekt ausgenutzt.

Der Wicking-Effekt, d.h. das spontane Benetzen und Füllen eines Mikrokanals mit einer Flüssigkeit (z.B. einem Farblack), basiert auf einer exakten Abstimmung der Oberflächenenergie von Prägelack und Farblack (gekennzeichnet durch den Kontaktwinkel $\theta$, den der Farblack auf einer glatten Fläche des Prägelacks einnimmt) und der Geometrie der Mikrokanäle (gekennzeichnet durch den Öffnungswinkel $\alpha$ eines Kanals mit sich nach unten verjüngendem Querschnitt, also z.B. eines Kanals mit V-förmigem Querschnitt), beschrieben durch folgende Formel:

$$\theta < \varphi = 90° - \alpha/2 \qquad (I)$$

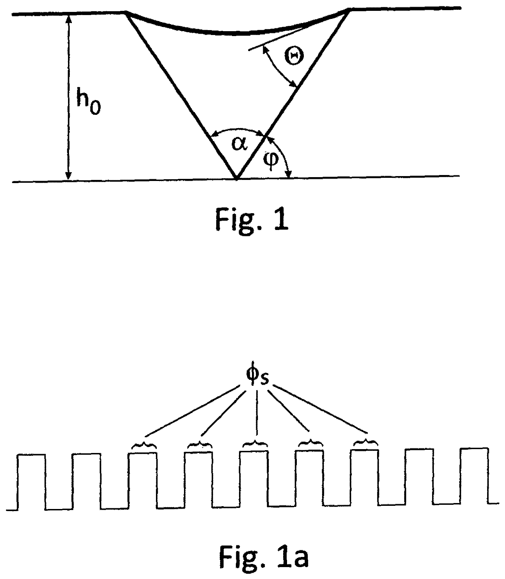

wobei $\varphi$ hier der Kantenwinkel der Seitenwände mit der Horizontalen ist (vgl. Fig. 1). Formel I ist die sogenannte Concus-Finn-Relation (P. Concus and R. Finn: On a class of capillary surfaces. J. Analyse Math. 23 (1970), 65-70), die beschreibt, dass eine Flüssigkeit (hier: Farblack) einen V-förmigen Kanal (im Prägelackmaterial) und nur diesen spontan benetzt, wenn der Kontaktwinkel kleiner als der Kantenwinkel ist. Für kleine Kanal-Öffnungswinkel ermöglicht die Concus-Finn-Relation bei vielen Flüssigkeiten eine vollkommen ungehinderte Benetzung und Füllung des Kanals. Die Relation ist beispielsweise auch für einen Kanal gültig, dessen Seitenwände aus zwei Kreiszylindern gebildet werden, wodurch ein Öffnungswinkel von 0° - am oberen Ende bzw. am unteren Ende der Kanalöffnung - entsteht.

Um zu verstehen, wie es sich mit dem Wicking-Effekt bei strukturierten Oberflächen verhält, ist außerdem Formel II wichtig:

$$\cos\theta_c = \frac{1 - \varphi s}{r - \varphi s}, \; \theta < \theta_c \qquad (II)$$

Hier bedeutet $\theta_c$ den kritischen Kontaktwinkel des Farblacks auf einer rauen oder strukturierten Prägelackfläche. $\theta_c$ ist geometrisch bedingt und muss unterschritten werden, damit die Kanäle mit Farblack benetzt bzw. gefüllt werden. Der kritische Kontaktwinkel $\theta_c$ wird durch den Rauigkeitsfaktor r und den Plateauflächenanteil $\varphi_s$ (= Anteil der nicht benetzten Fläche der Mikrokanäle) bestimmt (vgl. Fig. 1a).

Ist Bedingung II erfüllt, werden nur die Kanäle gefüllt, während die Plateauflächen trocken, also unbenetzt, bleiben.

Der Rauigkeitsfaktor r ist der Quotient aus wahrer Oberfläche und ihrer horizontalen Projektion, wie beispielsweise in Dinesh Chandra et al., "Dynamics of a droplet imbibing on a rough surface", Langmuir 2011, 27, 13401-13405 beschrieben.

Der Plateauflächenanteil $\varphi_s$ stellt den Anteil der nicht benetzten Fläche der Mikrokanäle dar, der erfindungsgemäß minimiert wird ($\varphi_s \sim 0$), um im Bereich der Mikrokanäle eine vollständig selektive Benetzung der Mikrokanäle zu erzielen.

Durch die Ausnutzung des Wicking-Effekts wird die Prägelackschicht nur im Bereich der Mikrokanäle durch den Farblack benetzt, im Bereich der "flachen" Nanostrukturen findet hingegen keine Benetzung durch Anlagerung des Farblacks statt.

Je größer der kritische Kontaktwinkel $\theta_c$, also je größer nach obiger Formel der Rauhigkeitsfaktor r, und je kleiner der Plateauflächenanteil $\varphi_s$ der Mikrokanäle ist, desto mehr Gestaltungsfreiheit besteht bei der Oberflächenenergie des Prägelacks.

Die Erfüllung von Formel I und Formel II ermöglicht eine vollständig spontane und ausschließliche Benetzung bzw. Füllung von Mikrokanälen (mit nicht rechteckigem Querschnitt) durch einen Farblack, wobei die Plateauflächen (gegebenenfalls mit "flachen" Nanostrukturen) unbenetzt bleiben.

Gemäß einer Ausführungsform der Erfindung erfüllen deshalb der Prägelack und der Farblack in Verbindung mit der Geometrie der Mikrokanäle die Bedingung gemäß Formel I und II:

$$\theta < \varphi = 90° - \alpha/2 \qquad (I)$$

$$\cos\theta_c = \frac{1 - \varphi s}{r - \varphi s}, \; \theta < \theta_c \qquad (II),$$

wobei θ der Kontaktwinkel des Farblacks auf einer glatten Fläche der Prägelackschicht ist, $\theta_c$ der kritische Kontaktwinkel des Farblacks ist, φ der Winkel zwischen Seitenwand des Mikrokanals in der Prägelackschicht und Horizontaler ist, α der Öffnungswinkel des Mikrokanals ist, r der Rauigkeitsfaktor der Prägelackschicht ist und $\varphi_s$ der Anteil der nicht benetzten Fläche (Plateauflächenanteil) der Mikrokanäle ist.

Wird als Prägelackschicht ein thermoplastischer Lack, der anschließend stabilisiert bzw. gehärtet wird, verwendet, so handelt es sich bevorzugt um einen thermoplastischen Lack auf Basis von Methylmethacrylat (MMA) oder Ethylcellulose oder Cycloolefincopolymer. Dem jeweiligen Basispolymer können zur Einstellung der geforderten thermoplastischen Eigenschaften bzw. zur Einstellung der anschließenden Stabilisierbarkeit Modifikatoren zugesetzt werden.

In Abhängigkeit des Basispolymers kommen als Modifikatoren beispielsweise Additive zur Einstellung der gewünschten Glastemperatur, also jenes Temperaturbereichs, in welchem sich der Lack in thermoplastischem Zustand befindet, oder Modifikatoren zur Erreichung einer dauerhaften Aushärtung der Prägelackschicht in Frage. Vorzugsweise werden die Komponenten in einem Lösungsmittel, beispielsweise in wässrigen Lösungsmitteln, Wasser, Alkoholen, Ethylacetat, Methylethylketon oder deren Mischungen, gelöst.

Einem thermoplastischen Lack für eine Prägelackschicht auf Basis von MMA wird vorzugsweise Nitrocellulose zur Erhöhung der Glastemperatur zugesetzt. Einem thermoplastischen Lack für eine Prägelackschicht auf Basis von Cycloolefincopolymeren werden vorzugsweise Polyethylenwachse zugesetzt. Einem thermoplastischen Lack auf Basis von Ethylcellulose werden zur Einstellung der Härtbarkeit vorzugsweise Crosslinker zugesetzt.

Die Konzentration des Basispolymers in der aufgetragenen Prägelackschicht beträgt in der Regel in Abhängigkeit von der Art des gewählten Basispolymers, von den gewünschten Eigenschaften der Prägelackschicht und von der Art und Konzentration der Modifikatoren zwischen 4 % und 50 Gew.-%.

Wird als Prägelackschicht ein UV-härtbarer Lack verwendet, so handelt es sich vorzugsweise um ein Lacksystem auf Basis eines Polyester-, eines Epoxy-, eines Acrylat- oder Polyurethansystems, das einen oder mehrere Photoinitiatoren enthält. Durch den oder die Photoinitiator(en) kann die Härtung bei einer definierten Wellenlänge oder in einem definierten Wellenlängenbereich eingestellt werden, wobei gegebenenfalls auch der Grad der Härtung variierbar sein kann. Ebenfalls ist es denkbar, dass ein wasserverdünnbarer UV-härtbarer Lack, vorzugsweise auf Polyesterbasis, eingesetzt wird.

Besonders geeignete UV-vernetzbare Prägelackzusammensetzungen sind beispielsweise Prägelacke auf Basis von Polyethylenglykol-Diacrylaten (PEGDA), gegebenenfalls mit 1-10 Gew.-% an höherfunktionalen Acrylaten, wie Trimethylolpropantriacrylat (TMPTA) oder Pentaerythritoltetraacrylat (PETTA), oder Mischungen von Acryloyl-Morpholin (ACMO) mit 10-50 Gew.-% an höherfunktionalen Acrylaten, wie Trimethylolpropantriacrylat (TMPTA) oder Pentaerythritoltetraacrylat (PETTA).

Diese Prägelackzusammensetzungen sind polar bzw. hydrophil und zeigen hohe Oberflächenenergien von bis zu 60 mN/m.

Die Prägelackzusammensetzungen enthalten 0,5-5 Gew.-% Photoinitiatoren, die die Vernetzung bei Einwirkung von UV-Strahlung oder Elektronenstrahl bewirken. Besonders geeignete Photoinitiatoren sind beispielsweise solche auf Basis von Acylphosphinoxiden, wie Iragure 819®, Genocure TPO®, Genocure BAPO®, oder oligomere polyfunktionale Alphahydroxyketone, wie Esacure KIP 150®, monomere Alphahydroxyketone, wie Esacure KL 200®, Genocure DMHA® oder Darocure 1173®. Es können aber auch Mischungen dieser Photoinitiatoren eingesetzt werden.

Bei dem auf die Prägelackschicht aufzubringenden Farblack handelt es sich um einen Lack, der lösliche Farbstoffe oder Farbpigmente enthält. Der Lack und der Farbstoff bzw. das Pigment werden dabei in Abstimmung mit der zu lackierenden Oberfläche ausgewählt.

Nach einer Ausführungsform der Erfindung werden als Farblack thermisch trocknende oder thermisch vernetzende Lacksysteme eingesetzt, bei denen durch Verdampfung des Lösungsmittels eine Härtung bzw. durch Temperaturerhöhung mittels Härter eine Vernetzung eintritt. Auch eine Kombination von beiden Funktionsweisen ist möglich, z.B. ein Abdampfen des Lösungsmittels und danach oder auch gleichzeitig eine Vernetzung durch Erhitzen. Beispiele für derartige Lacksysteme sind solche auf Basis von organischen oder anorganischen Lösungsmitteln, wie MEK (Methylethylketon), Aceton, IPA (Isopropylalkohol), Ethylacetat, Toluol, wässrigen Systemen, oder auf Basis von Nitrocellulose, Polyvinylchlorid, Polyvinylbutyral oder Polyvinylacetat.

Alternativ zu thermisch härtenden Lacken können strahlungshärtbare Lacke eingesetzt werden. Die Aushärtung erfolgt dabei durch Vernetzung mittels UV-Anregung, meist unter Zuhilfenahme eines Photoinitiators. Bei einer Kombination mit thermischer Trocknung wird zuerst das Lösungsmittel verdampft und anschließend die Vernetzung ausgeführt. Beispiele für UV-härtende Lacke sind solche auf Basis eines Polyester-, Epoxy-, Acrylat- oder Polyurethansystems.

Als Farblack auf Basis von Acrylat kann zum Beispiel Hydroxyethylcaprolactonacrylat, Ethoxyethoxyethylacrylat, 2-Ethoxyethylacrylat, Tetrahydrofurfurylacrylat, γ-Butylolactonacrylat, Acryloylmorpholin, Hydroxypropylacrylat oder Isobornylacrylat genannt werden.

Diese Farblackzusammensetzungen enthalten 0,5-5 Gew.-% Photoinitiatoren, wie beispielsweise solche auf Basis von Acylphosphinoxiden oder Alphahydroxyketonen.

Isobornylacrylat kann aufgrund seiner geringen Oberflächenspannung und damit eines geringen Kontaktwinkels auch in Verbindung mit Prägelacken geringerer Oberflächenenergie, wie beispielsweise Polyurethanacrylat-basierten Prägelacken, verwendet werden.

Die Lackzusammensetzung kann entweder polare Restgruppen wie im Fall von 4-Acryloylmorpholin (ACMO) oder unpolare Restgruppen wie im Fall von Isobornylacrylat enthalten. Dies richtet sich jeweils nach der Oberflächenenergie der Prägelackschicht.

Nach Aufbringung der strahlungshärtbaren Farblackzusammensetzung wird diese zum Beispiel mittels Elektronenstrahl oder UV-Strahlung polymerisiert.

Als Farbstoff werden jene Moleküle bezeichnet, die sich vollständig im eingesetzten Lösungsmittel lösen, z.B. Rhodamin und Orasol. Der Farbstoff wird in den jeweiligen Bindemitteltypen als Farbstoffkonzentrat weiterverarbeitet.

Pigmente können nach ihrer chemischen Struktur in anorganisch oder organisch unterteilt werden. Anorganische und organische Pigmente können wiederum in natürliche und synthetische Pigmente unterteilt sowie nach ihren optischen Eigenschaften (weiß, bunt, schwarz, Effekte) und ihren technischen Eigenschaften (Korrosionsschutz, Magnetismus) unterschieden werden.

Zu den synthetischen Pigmenten zählen beispielsweise Azopigmente, z.B. Pararot, oder polycyclische Pigmente, z.B. Kupferphthalocyanin (Blaupigment), sowie synthetische Leuchtpigmente, wie Invisible Fluorescent Red (organischer Europium-Komplex). Ein natürliches anorganisches Pigment ist beispielsweise Zinnober (mineralische Farbe), synthetische anorganische Pigmente sind zum Beispiel Eisenoxid, Ruß und Weißpigmente.

Es können aber auch handelsübliche Druckfarben als Farblackbasis eingesetzt werden. Beispielsweise genannt werden hier Farblacksysteme auf Basis von PVC-Mischpolymerisat, Nitrocellulose oder Polyvinylbutyral (PVB).

Bevorzugt werden die Mikrokanäle in dem für die farbige Mikrostruktur vorgesehenen Bereich der Prägelackschicht mit einer derartigen Geometrie eingebracht, dass eine besonders selektive Benetzung und Füllung durch den jeweiligen Farblack resultiert. Bei einer besonders geeigneten Geometrie beträgt das Verhältnis von Tiefe zu Breite der Mikrokanäle > 1.

Nach einer anderen bevorzugten Ausgestaltung der Erfindung weisen die Mikrokanäle einen sich in die Tiefe verjüngenden Querschnitt auf, besonders bevorzugt einen V-förmigen Querschnitt.

Der Farblack wird nach einer weiteren Ausführungsform der Erfindung im Wesentlichen nur auf den für die farbige Mikrostruktur vorgesehenen Bereich der Prägelackschicht aufgebracht, z.B. gedruckt, wobei eventuelle Registerschwankungen dabei durch Benetzung der Mikrokanäle ausgeglichen werden.

Nach dem Trocknen und/oder Aushärten des Farblacks kann gegebenenfalls eine funktionelle Schicht, beispielsweise eine metallische Reflexionsschicht, oder eine Schutzlackschicht auf die Prägelackschicht aufgebracht werden.

Vorzugsweise wird die funktionelle Schicht durch PVD ("physical vapour deposition")- oder CVD ("chemical vapour deposition")-Verfahren (auch initiated-CVD oder oxygenated-CVD), etwa durch thermisches Verdampfen, durch Sputtern oder Elektronenstrahlbedampfung abgeschieden.

Geeignete metallische Reflexionsschichten sind beispielsweise Schichten aus Al, Sn, Cu, Zn, Pt, Pd, Au, Ag, Cr, Ti, Ni, Mo, Fe oder deren Legierungen, wie z.B. Cu-Al, Cu-Sn, Cu-Zn, Eisenlegierungen, Stahl, Edelstahl, Metallverbindungen wie Metalloxide oder -sulfide, beispielsweise Kupferoxid, Aluminiumoxid, Zinksulfid und dergleichen.

Es können weitere funktionelle Schichten vorgesehen sein, also Schichten, die irgendwelche Eigenschaften, die visuell oder maschinell nachgewiesen werden können, wie z.B. Fluoreszenz, magnetische Codierung oder Maschinenlesbarkeit, oder Schutzfunktionen aufweisen oder die z.B. die Anhaftung an das Wertdokument erleichtern.

Bei der Schutzlackschicht kann es sich beispielsweise um eine transparente Lackschicht handeln. Die Schutzlackschicht kann auch eine Klebstoffschicht sein, um das Sicherheitselement handhabungsfreundlich auf einem Wertdokument vorsehen zu können. Eine solche Klebstoffschicht kann beispielsweise eine Heißsiegel-, Kaltsiegel- oder Selbstklebebeschichtung sein. Die Klebstoffschicht kann ebenfalls zusätzlich mit einer Schutzlackschicht aufgebracht sein. Die Schutzlackschicht kann das Sicherheitselement zuverlässig vor äußeren Einflüssen, wie etwa Oxidation, schützen.

Im erfindungsgemäßen Verfahren wird also durch gezielte Vorstrukturierung mittels eines Prägeprozesses eine definierte, lokal begrenzte Benetzung von Lack auf einer Folienoberfläche erreicht. Es ergibt sich eine exakte Übereinstimmung der Mikrostrukturen mit der Lackbeschichtung ohne Toleranzen. Insbesondere wird damit die selektive Beschichtung von Mikrostrukturen durch Farblack ermöglicht, ohne dass es zur Ausbildung eines Tonungsfilms kommt.

Ein anderer Aspekt der Erfindung betrifft die in Anspruch 11 definierte Verwendung eines Sicherheitselements mit einer farbigen Mikrostruktur, hergestellt durch das oben beschriebene Verfahren, als Sicherheitselement in oder auf Datenträgern, Wertdokumenten, wie Ausweisen, Karten oder Banknoten, Etiketten, Siegeln, auf Verpackungsmaterialien oder Produkten.

Die Erfindung wird nachfolgend durch ein Beispiel und anhand der Zeichnung näher erläutert, wobei

Fig. 1 eine schematische Darstellung des Zusammenhangs zwischen Kontaktwinkel und Geometrie eines Mikrokanals ist,

Fig. 1a den Plateauflächenanteil $\varphi_s$ einer strukturierten Oberfläche verdeutlicht, und

Fig. 2a-c Verfahrensstufen einer Ausführungsform des erfindungsgemäßen Verfahrens zur Herstellung eines Sicherheitselements mit einer farbigen Mikrostruktur zeigen, schematisch dargestellt anhand von Schnitten durch ein Sicherheitselement, wobei:

1 = glatter bzw. nanostrukturierter Oberflächenbereich
2 = Mikrokanäle
3 = Prägelackschicht
4 = Farblack
5 = Schutzlackschicht oder funktionelle Schicht
6 = Trägersubstrat.

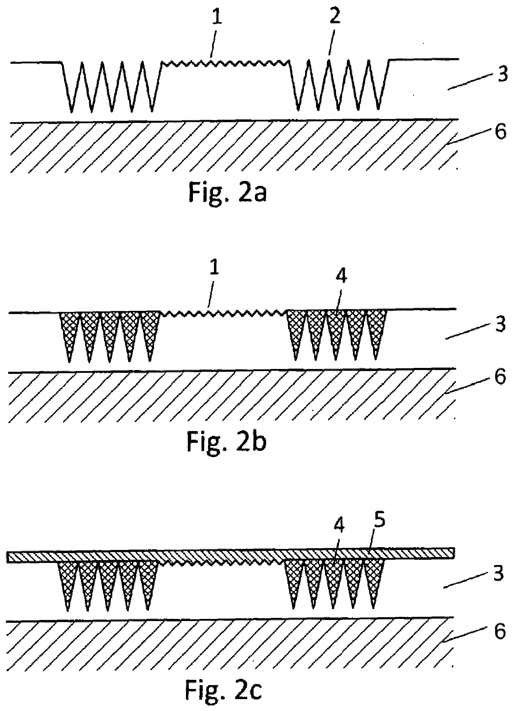

Fig. 2a zeigt ein Trägersubstrat 6 nach der Aufbringung einer Prägelackschicht 3 und der Einbringung von Mikrokanälen 2 in einen für die farbige Mikrostruktur vorgesehenen Bereich der Prägelackschicht 3. Der für die Farbe vorgesehene Bereich kann auf dem Sicherheitselement die Form eines Musters, eines Bildmotivs, eines Ornaments, etc. bilden. Die Oberflächenstrukturierung der Prägelackschicht 3 umfasst in diesem Stadium einerseits glatte Oberflächenbereiche 1 und andererseits Mikrokanäle 2. Die Oberfläche kann aber auch andere Strukturen aufweisen, z.B. Nanostrukturen, wie etwa Mottenaugen oder Gitterstrukturen, die neben den Mikrokanälen 2 ausgebildet sind und im Kontext der gegenständlichen Erfindung ebenfalls als "glatte" Oberflächenbereiche angesehen werden.

Die Mikrokanäle 2 weisen einen V-förmigen Querschnitt auf und weisen in Abhängigkeit von der Dicke der Lackschicht eine Tiefe von beispielsweise 15 bis 30 µm und eine Öffnungsweite (=Breite) von beispielsweise 5 bis 15 µm auf.

In Fig. 2b wird der Schnitt durch das beschichtete Trägersubstrat 6 nach dem Aushärten der Prägelackschicht 3 und dem Aufbringen eines Farblacks 4 auf die ausgehärtete Prägelackschicht 3 gezeigt. Der in diesem Verfahrensstadium bereits aufgebrachte Farblack 4 ist nur in den Mikrokanälen 2 verteilt, wohingegen die glatten Oberflächenbereiche 1 aufgrund des Wicking-Effekts nicht benetzt wurden. Der Farblack 4 kann gegebenenfalls auch bereits partiell aufgebracht werden, d.h. nur auf den für die farbige Mikrostruktur vorgesehenen Bereich der Prägelackschicht 3.

Fig. 2c zeigt die Struktur des Sicherheitselements nach dem letzten Verfahrensschritt. Auf die Prägelackschicht 3 und die Farblackschicht bzw. den Farblack 4 wurde nunmehr eine Schutzlackschicht 5 aufgebracht. Diese deckt sowohl die glatten Oberflächenbereiche 1 als auch die mit Farblack 4 gefüllten Mikrokanäle 2 ab.

Beispiel:

Es wurde auf einem, von einer Folie gebildeten Trägersubstrat eine Schicht eines Prägelacks aufgebracht, auf den in weiterer Folge Mikrokanäle eingeprägt wurden. Im Anschluss daran wurde auf den ausgehärteten Prägelack ein Farblack aufgetragen, der ohne Bildung eines Tonungsfilms den dafür vorgesehenen Mikrostrukturbereich mit maximalem Kontrast einfärbte.

| Trägersubstrat: | PE |
| Prägelack: | 80 Gew.-% PEGDA (MW = 600 g/mol entsprechend etwa n = 10) |
| | 17 Gew.-% TMPTA |
| | 3 Gew.-% KL200 |
| Farblack: | 48 Gew.-% Nitrocellulose |
| | 50 Gew.-% IPA |
| | 2 % Kupferphthalocyanin (Farbpigment ) |

**Patentansprüche**

1. Verfahren zur Herstellung eines Sicherheitselements mit einer farbigen Mikrostruktur, umfassend die folgenden Schritte:

a) Bereitstellen eines Trägersubstrats (6)
b) Aufbringen einer Prägelackschicht (3) auf das Trägersubstrat (6)
c) Einbringen von Mikrokanälen (2) in einen für die farbige Mikrostruktur vorgesehenen Bereich der Prägelackschicht (3)

d) Aushärten der Prägelackschicht (3)

e) Aufbringen eines Farblacks (4), der ausschließlich die Mikrokanäle (2) benetzt und füllt, auf die ausgehärtete Prägelackschicht (3)

f) Trocknen und/oder Aushärten des Farblacks (4) und gegebenenfalls Aufbringen einer funktionellen Schicht oder einer Schutzlackschicht (5) nach Trocknen und/oder Aushärten des Farblacks (4).

2. Verfahren nach Anspruch 1, **dadurch gekennzeichnet, dass** der Prägelack (3) und der Farblack (4) in Verbindung mit der Geometrie der Mikrokanäle (2) die Bedingung gemäß Formel I und II erfüllen:

$$\theta < \varphi = 90° - \alpha/2 \qquad \text{(I)}$$

$$\cos\theta_c = \frac{1 - \varphi s}{r - \varphi s}, \ \theta < \theta_c \qquad \text{(II)},$$

wobei $\theta$ der Kontaktwinkel des Farblacks (4) auf einer glatten Fläche der Prägelackschicht (3) ist, $\theta_c$ der kritische Kontaktwinkel des Farblacks (4) ist, $\varphi$ der Winkel zwischen Seitenwand des Mikrokanals (2) in der Prägelackschicht (3) und Horizontaler ist, $\alpha$ der Öffnungswinkel des Mikrokanals (2) ist, r der Rauigkeitsfaktor der Prägelackschicht (3) ist und $\varphi_s$ der Anteil der nicht benetzten Fläche (Plateauflächenanteil) der Mikrokanäle (2) ist.

3. Verfahren nach Anspruch 1 oder 2, **dadurch gekennzeichnet, dass** der Prägelack (3) ausgewählt ist aus thermoplastischen Lacken auf Basis von Methylmethacrylat (MMA) oder Ethylcellulose oder Cycloolefincopolymer.

4. Verfahren nach Anspruch 1 oder 2, **dadurch gekennzeichnet, dass** der Prägelack (3) ausgewählt ist aus UV-härtbaren Lacken auf Basis eines Polyester-, eines Epoxy-, eines Acrylat- oder Polyurethansystems.

5. Verfahren nach einem der Ansprüche 1 bis 4, **dadurch gekennzeichnet, dass** der Farblack (4) ausgewählt ist aus thermisch trocknenden oder thermisch vernetzenden Lacksystemen auf Basis von organischen oder anorganischen Lösungsmitteln oder auf Basis von Nitrocellulose, Polyvinylchlorid, Polyvinylbutyral oder Polyvinylacetat, wobei der Lack Farbpigmente oder lösliche Farbstoffe enthält.

6. Verfahren nach einem der Ansprüche 1 bis 4, **dadurch gekennzeichnet, dass** der Farblack (4) ausgewählt ist aus UV-härtenden Lacken auf Basis eines Polyester-, Epoxy-, Acrylat- oder Polyurethansystems, wobei der Lack Farbpigmente oder lösliche Farbstoffe enthält.

7. Verfahren nach einem der Ansprüche 1-6, **dadurch gekennzeichnet, dass** das Verhältnis von Tiefe zu Breite der Mikrokanäle (2) > 1 ist.

8. Verfahren nach einem der Ansprüche 1-7, **dadurch gekennzeichnet, dass** die Mikrokanäle (2) einen sich in die Tiefe verjüngenden Querschnitt aufweisen.

9. Verfahren nach Anspruch 8, **dadurch gekennzeichnet, dass** die Mikrokanäle (2) einen V-förmigen Querschnitt aufweisen.

10. Verfahren nach einem der Ansprüche 1-9, **dadurch gekennzeichnet, dass** der Farblack (4) im Wesentlichen nur auf den für die farbige Mikrostruktur vorgesehenen Bereich der Prägelackschicht (3) aufgebracht wird.

11. Verwendung eines Sicherheitselements mit einer farbigen Mikrostruktur, hergestellt durch das Verfahren nach einem der Ansprüche 1 bis 10, als Sicherheitselement in oder auf Datenträgern, Wertdokumenten, Etiketten, Siegeln, Verpackungsmaterialien oder Produkten.

**Claims**

1. A method for producing a security element having a coloured microstructure, comprising the following steps:

a) providing a carrier substrate (6);

b) applying an embossing lacquer layer (3) onto the carrier substrate (6);

c) introducing microchannels (2) into a region of the embossing lacquer layer (3) provided for the coloured microstructure;

d) curing the embossing lacquer layer (3);

e) applying a colour lacquer (4), which wets and fills only the microchannels (2), onto the cured embossing lacquer layer (3);

f) drying and/or curing the colour lacquer (4) and optionally applying a functional layer or a protective lacquer layer (5) after the colour lacquer (4) has dried and/or cured.

2. The method according to claim 1, **characterised in that** the embossing lacquer (3) and the colour lacquer (4) in conjunction with the geometry of the microchannels (2) satisfy the condition according to formulas I and II:

$$\theta < \varphi = 90° - \alpha/2 \qquad (\text{I})$$

$$cos\theta_c = \frac{1 - \varphi s}{r - \varphi s}, \theta < \theta_c \qquad (\text{II}),$$

wherein $\theta$ is the contact angle of the colour lacquer (4) on a smooth surface of the embossing lacquer layer (3), $\theta_c$ is the critical contact angle of the colour lacquer (4), $\varphi$ is the angle between a side wall of the microchannel (2) in the embossing lacquer layer (3) and the horizontal, $\alpha$ is the angle of aperture of the microchannel (2), r is the roughness factor of the embossing lacquer layer (3) and $\varphi_s$ is the proportion of the non-wetted area (plateau area proportion) of the microchannels (2).

3. The method according to claim 1 or 2, **characterised in that** the embossing lacquer (3) is selected from thermoplastic lacquers based on methyl methacrylate (MMA) or ethyl cellulose or cycloolefin polymer.

4. The method according to claim 1 or 2, **characterised in that** the embossing lacquer (3) is selected from UV-curable lacquers based on a polyester system, an epoxy system, an acrylate system or polyurethane system.

5. The method according to any one of claims 1 to 4, **characterised in that** the colour lacquer (4) is selected from thermally drying or thermally cross-linking lacquer systems based on organic or inorganic solvents or based on nitrocellulose, polyvinyl chloride, polyvinyl butyral or polyvinyl acetate, wherein the lacquer contains colour pigments or soluble dyes.

6. The method according to any one of claims 1 to 4, **characterised in that** the colour lacquer (4) is selected from UV-curing lacquers based on a polyester system, epoxy system, acrylate system or polyurethane system, wherein the lacquer contains colour pigments or soluble dyes.

7. The method according to any one of claims 1-6, **characterised in that** the ratio of depth to width of the microchannels (2) is >1.

8. The method according to any one of claims 1-7, **characterised in that** the microchannels (2) have a cross-section that tapers depthwise.

9. The method according to claim 8, **characterised in that** the microchannels (2) have a V-shaped cross-section.

10. The method according to any one of claims 1-9, **characterised in that** the colour lacquer (4) is applied substantially only to the region of the embossing lacquer layer (3) provided for the coloured microstructure.

11. Use of a security element having a coloured microstructure, produced by the method according to any one of claims 1 to 10, as a security element in or on data carriers, value documents, labels, seals, packaging materials or products.

**Revendications**

1. Procédé de production d'un élément de sécurité ayant une microstructure colorée, comprenant les étapes suivantes:

a) fournir un substrat de support (6);

b) appliquer une couche de laque de gaufrage (3) sur le substrat de support (6);

c) introduire des microcanaux (2) dans une région de la couche de laque de gaufrage (3) fournie pour la microstructure colorée;

d) faire durcir la couche de laque de gaufrage (3);

e) appliquer une laque colorée (4), qui n'humidifie et ne remplit que les microcanaux (2), sur la couche de laque de gaufrage durcie (3);

f) faire sécher et/ou durcir la laque colorée (4) et éventuellement appliquer une couche fonctionnelle ou une couche de laque de protection (5) après que la laque colorée (4) a séché et/ou durci.

2. Procédé selon la revendication 1, **caractérisé en ce que** la laque de gaufrage (3) et la laque colorée (4) en conjonction avec la géométrie des microcanaux (2) satisfont à la condition selon les formules I et II :

$$\theta < \varphi = 90° - \alpha/2 \qquad (\mathrm{I})$$

$$cos\theta_c = \frac{1-\varphi s}{r-\varphi s}, \theta < \theta_c \qquad (\mathrm{II}),$$

dans lequel $\theta$ est l'angle de contact de la laque colorée (4) sur une surface lisse de la couche de laque de gaufrage (3), $\theta_c$ est l'angle de contact critique de la laque colorée (4), $\varphi$ est l'angle entre la paroi latérale du microcanal (2) dans la couche de laque de gaufrage (3) et l'horizontale, $\alpha$ est l'angle d'ouverture du microcanal (2), r est le facteur de rugosité de la couche de laque de gaufrage (3) et $\varphi_s$ est la proportion de la surface non humidifiée (proportion de surface de plateau) des microcanaux (2).

3. Procédé selon la revendication 1 ou 2, **caractérisé en ce que** la laque de gaufrage (3) est choisie parmi les laques thermoplastiques à base de méthacrylate de méthyle (MMA), d'éthylcellulose (MMA) ou de polymère de cyclooléfine.

4. Procédé selon la revendication 1 ou 2, **caractérisé en ce que** la laque de gaufrage (3) est choisie parmi les laques durcissables aux UV à base d'un système polyester, d'un système époxy, d'un système acrylate ou d'un système polyuréthane.

5. Procédé selon l'une quelconque des revendications 1 à 4, **caractérisé en ce que** la laque colorée (4) est choisie parmi des systèmes de laque à séchage thermique ou à réticulation thermique basés sur des solvants organiques ou inorganiques ou basés sur la nitrocellulose, le polychlorure de vinyle, le polyvinylbutyral ou le polyacétate de vinyle, dans lequel la laque contient des pigments colorés ou des colorants solubles.

6. Procédé selon l'une quelconque des revendications 1 à 4, **caractérisé en ce que** la laque colorée (4) est choisie parmi les laques durcissables aux UV à base d'un système polyester, d'un système époxy, d'un système acrylate ou d'un système polyuréthane, dans lequel la laque contient des pigments colorés ou des colorants solubles.

7. Procédé selon l'une quelconque des revendications 1 à 6, **caractérisé en ce que** le rapport de la profondeur à la largeur des microcanaux (2) est > 1.

8. Procédé selon l'une quelconque des revendications 1 à 7, **caractérisé en ce que** les microcanaux (2) ont une section transversale qui s'effile dans le sens de la profondeur.

9. Procédé selon la revendication 8, **caractérisé en ce que** les microcanaux (2) ont une section transversale en V.

10. Procédé selon l'une quelconque des revendications 1 à 9, **caractérisé en ce que** la laque colorée (4) est appliquée essentiellement uniquement à la région de la couche de laque de gaufrage (3) fournie pour la microstructure colorée.

11. Utilisation d'un élément de sécurité ayant une microstructure colorée, produit par le procédé selon l'une quelconque des revendications 1 à 10, en tant qu'élément de sécurité dans ou sur des supports de données, des documents de valeur, des étiquettes, des sceaux, des matériaux d'emballage ou des produits.

Fig. 1

Fig. 1a

Fig. 2a

Fig. 2b

Fig. 2c

**IN DER BESCHREIBUNG AUFGEFÜHRTE DOKUMENTE**

**In der Beschreibung aufgeführte Patentdokumente**

- WO 2009083146 A
- WO 2009121578 A
- WO 2011057739 A
- EP 3404070 A1
- EP 2921888 A1
- WO 2008017362 A
- DE 102010014866 A1


**In der Beschreibung aufgeführte Nicht-Patentliteratur**

- **P. CONCUS** ; **R. FINN**. On a class of capillary surfaces. *J. Analyse Math.*, 1970, vol. 23, 65-70
- **DINESH CHANDRA et al.** Dynamics of a droplet imbibing on a rough surface. *Langmuir*, 2011, vol. 27, 13401-13405